# EUROPEAN PATENT APPLICATION

(11) **EP 3 553 850 A1**
(43) Date of publication of application: **16.10.2019**
(21) Application number: 18841816.4
(22) Date of filing: 02.08.2018
(51) Int. Cl.: H01M 4/13, H01M 4/38, H01M 4/62, H01M 10/0562, H01M 10/0567

(54) **SECONDARY BATTERY**

(30) Priority: 03.08.2017 JP 2017150950
(71) Applicant: Power IV, Inc., Tokyo 102-0074 (JP)
(72) Inventor: NAKAJIMA, Junji, Nagoya-shi Aichi 461-0040 (JP); FUJIWARA, Yoshimasa, Hirakata-shi Osaka 573-0093 (JP); DEGAWA, Akimichi, Tokyo 104-0051 (JP)
(74) Representative: TBK
(86) International application number: PCT/JP2018/029114
(87) International publication number: WO 2019/027016

(57) **Abstract**

A secondary battery includes: a first electrode (10), a second electrode (20), a separator containing a ceramic material, and an electrolyte, and the second electrode (20) contains a silicon-containing substance having a particle diameter of from 30 to 200 nm, a multilayer graphene, a graphite material, and a binding agent.

## Description

### TECHNICAL FIELD

The present invention relates to a secondary battery.

### BACKGROUND ART

In batteries, chemical energy of chemical compounds contained is converted to electric energy via electrochemical oxidation-reduction reactions. In recent years, batteries are widely used worldwide mainly in electronic devices, communication devices, and mobile electronic devices such as computers. Furthermore, batteries are expected to have future practical applications in mobile object, such as electric vehicles etc., and in large-size devices, such as stationary batteries in electric power load leveling systems, etc. Therefore, batteries have become increasingly important key devices.

Among batteries, a lithium ion secondary battery is currently widely available. The lithium ion secondary battery generally includes a positive electrode that contains lithium-containing transition metal complex oxides as an active material, a negative electrode that contains, as an active material, a material that allows occlusion and release of lithium ions (for example, lithium metal, lithium alloy, metal oxide, or carbon), a non-aqueous electrolytic solution, and a separator (see JP2015-002167A).

### SUMMARY OF INVENTION

However, conventional lithium ion secondary batteries have limitations in power and capacity per unit weight, and there is a demand for a novel secondary battery.

JP2015-002167A discloses a secondary battery that can achieve high capacity and high power output that could not be achieved by conventional lithium ion secondary batteries. However, in order to commercialize electric vehicles, there is a demand for further improvement of high input and rapid charge performance. In addition, with the secondary battery disclosed in JP2015-002167A, a service life of about 3000 cycles can be ascertained. However, there is a demand for further improvement of the service life performance in order to commercialize electric vehicles and smart grids.

An object of the present invention is to provide a secondary battery capable of achieving a long service life, high power input/output, and high capacity.

A secondary battery according to an embodiment of the present invention includes: a first electrode; a second electrode; a separator containing a ceramic material; and an electrolyte, wherein the second electrode contains: a silicon-containing substance having a particle diameter of from 30 to 200 nm; a multilayer graphene; a graphite material; and a binding agent.

In one embodiment, a weight ratio between the graphite material and the multilayer graphene and a weight ratio between the silicon-containing substance and the multilayer graphene in the second electrode are as follows: 20 ≥ weight of graphite material/weight of multilayer graphene ≥ 3 30 ≥ weight of silicon-containing substance/weight of multilayer graphene ≥ 4.

In one embodiment, the electrolyte contains propynyl methanesulfonate.

In one embodiment, the electrolyte is a solid electrolyte and contains elemental phosphorus and elemental sulfur.

In one embodiment, the electrolyte has a layer having a perovskite structure.

In one embodiment, the secondary battery has a mechanism in which an electricity storage mechanism is exhibited as an external force is exerted on a perovskite layer by expansion of the silicon-containing substance during charging of the secondary battery.

In one embodiment, the first electrode consists of a material containing lithium and nickel.

### EFFECT OF INVENTION

According to one embodiment of the present invention, it is possible to provide a secondary battery that is capable of achieving a long service life, high power input/output, and high capacity.

### BRIEF DESCRIPTION OF DRAWINGS

FIG. 1 is a schematic view of a secondary battery according to an embodiment of the present invention.
FIG. 2 is a graph showing specific energy density for the secondary battery according to the embodiment of the present invention and a lithium ion battery.

### DESCRIPTION OF EMBODIMENTS

A secondary battery according to an embodiment of the present invention will be described below with reference to the drawings. However, the present invention is not limited to the following embodiment.

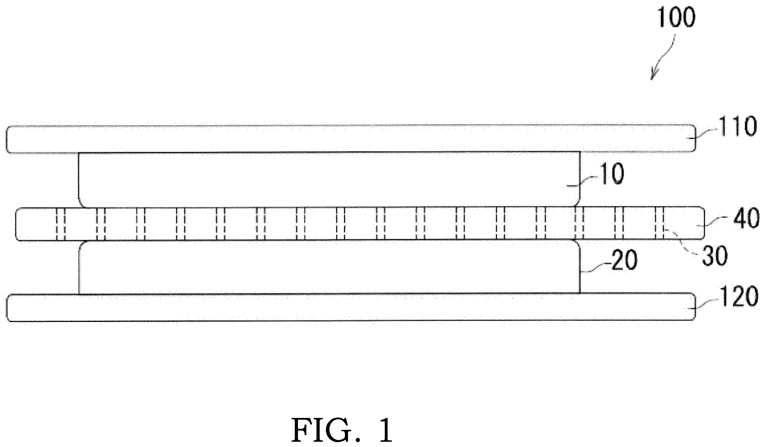

FIG. 1 shows a schematic view of a secondary battery 100 of this embodiment. The secondary battery 100 includes an electrode 10, an electrode 20, an ion transporter 30, and a hole transporter 40. The electrode 10 faces the electrode 20 via the ion transporter 30 and the hole transporter 40, and the electrode 10 is not in a physical contact with the electrode 20 by the presence of either one of the ion transporter 30 or the hole transporter 40.

In this configuration, the electrode (first electrode) 10 serves as a positive electrode, and an electrode (second electrode) 20 serves as a negative electrode. When the secondary battery 100 is discharged, the electrode 10 has an electric potential higher than an electric potential of the electrode 20, and an electric current flows from the electrode 10 to the electrode 20 through an external load (not shown). In addition, when the secondary battery 100 is charged, a terminal of an external power source (not shown) having a higher electric potential is electrically connected to the electrode 10, and a terminal of the external power source (not shown) having a lower electric potential is electrically connected to the electrode 20. In addition, in this configuration, the electrode 10 is in contact with a current collector (first current collector) 110 to form the positive electrode, and the electrode 20 is in contact with a current collector (second current collector) 120 to form the negative electrode.

The ion transporter 30 is in contact with the electrode 10 and the electrode 20. FIG. 1 schematically shows a case in which the ion transporter 30 is respectively placed in pores provided in the hole transporter 40 so as to achieve connections between the electrode 10 and the electrode 20. Instead of this configuration, it may be possible to employ a configuration in which the pores are not provided, and an ion conductive membrane such as a NASICON is provided. The ion transporter 30 in the pores is, for example, a liquid form

(specifically, an electrolytic solution). Alternatively, the ion transporter 30 may be a solid form or gel form. When the secondary battery 100 is discharged, ions (cations) generated in the electrode 20 move to the electrode 10 through the ion transporter 30. On the other hand, when the secondary battery 100 is charged, the ions generated in the electrode 10 move to the electrode 20 through the ion transporter 30. A case in which the electric potential of the electrode 10 becomes higher than the electric potential of the electrode 20 as the ions move from the electrode 10 to the electrode 20 may be conceived. Behaviors caused by other mechanisms may also be conceived. Specifically, when the secondary battery 100 is charged, as electrons are implanted to the electrode 20, holes are generated in the electrode 10 in the presence of excessive cations, and the holes move towards the electrode 20. The holes generated in the electrode 10 collide with the ion transporter 30 and the hole transporter 40, and thereby, separation is caused from a contained-material, which is contained in a portion including the hole transporter 40 or the ion transporter 30 and can produce polyvalent cations. The polyvalent cations are transported and collide with the electrode 20 to generate the holes. The holes in the electrode 20 move in the direction perpendicular to the direction of electric field of the electrode 10, and the electrons are accumulated in the direction opposite to the direction of the holes. Here, it is conceived that this phenomenon is caused by graphene used in the electrode 20. In this case, the electrode 10 is formed of a semiconductor material that has been p-typed by a doping, and the electrode 20 is formed of a semiconductor material in which the silicon contained has been n-typed. As a result, it is possible to achieve rapid charge to obtain high input performance.

In addition, when the secondary battery 100 is discharged, a dielectric polarization reaction is caused, and the electrons accumulated in an electron accumulation layer of the electrode 20 are discharged from the electrode to the outside at once. Thereby, the holes in the electrode 20 move towards the electrode 10 side, which results in a high power output.

In this description, the NASICON refers to a substance having the following chemical formula:

Li_{1+x+y}Alx(Ti, Ge)₂₋ₓSi_{y}P_{3-y}O₁₂

It has been found the secondary battery 100 has a bipolar structure having a mechanism in which as if two batteries having the different phenomena in the electrode 10 and the electrode 20 were provided therein. As a result, it has been found that it is possible to obtain a battery with a high safety, a long service life, a high power input/output, and a high capacity that have not been achieved previously.

For example, the ions include alkali metal ions or alkaline earth metal ions. The electrode 10 contains a compound that contains alkali metal ions or alkaline earth metal ions. The electrode 20 allows occlusion and release of alkali metal ions or alkaline earth metal ions. When the secondary battery 100 is discharged, alkali metal ions or alkaline earth metal ions are released from the electrode 20 and move to the electrode 10 through the ion transporter 30. In addition, when the secondary battery 100 is charged, alkali metal ions or alkaline earth metal ions move from the electrode 10 to the electrode 20 through the ion transporter 30 and are occluded in the electrode 20. The ions transported through the ion transporter 30 may be both of alkali metal ions and alkaline earth metal ions.

In the secondary battery 100 according to this embodiment, the electrode 10 has a p-type semiconductor. In both cases in which the secondary battery 100 is charged and discharged, the holes move through the electrode 10.

The hole transporter 40 is in contact with the electrode 10 and the electrode 20. When the secondary battery 100 is discharged, the holes in the electrode 10 move to the electrode 20 via the external load (not shown), and in addition, the electrode 10 receives the holes through the hole transporter 40. On the other hand, when the secondary battery 100 is charged, the holes in the electrode 10 move to the electrode 20 through the hole transporter 40, and in addition, the electrode 10 receives the holes from the external power source (not shown).

With the secondary battery 100 according to this embodiment, in both cases in which the secondary battery 100 is charged and discharged, not only the ions, but also the holes move. Specifically, when the secondary battery 100 is discharged, not only do the ions generated in the electrode 20 move to the electrode 10 through the ion transporter 30, but the holes also circulates through the electrode 10, the external load (not shown), the electrode 20, and the hole transporter 40 in this order due to an electric potential difference between the electrode 10 and the electrode 20. In addition, it is possible to conceive a case in which, when the secondary battery 100 is charged, not only do the ions generated in the electrode 10 move to the electrode 20 through the ion transporter 30, but the holes also circulate through the electrode 10, the hole transporter 40, the electrode 20, and the external power source (not shown) in this order. However, the following phenomenon have been found to be brought about under the conditions described in the attached claims. When the secondary battery 100 is discharged, the electrons present in the electrode 20 are discharged to an external circuit, and at the same time, some of the holes present in the electrode 20 reach the hole transporter 40, while some of the holes present in the electrode 20 collide with the polyvalent cations in the ion transporter 30 to cause the polyvalent cations to return to respective metal-containing compounds. As the holes move within the electrode 10 through the hole transporter 40, a quantum balance in the electrode with the electrons in the electrode 10 is achieved. In other words, the accumulation of the electrons in the electrode 20 causes the high power input/output and its capacity, and it is possible to obtain the bipolar structure having a mechanism provided with the electrode 10 serving as a trigger function of this operation. Because the electrode 20 is formed of a graphene and a silicon-containing substance, more holes can be obtained compared to conventional ion batteries, and therefore, it is possible to accumulate more electrons compared to the conventional ion batteries. Furthermore, it has been found that because the ion transporter 30 and the hole transporter 40 have perovskite layers, the pressure caused by expansion of silicon during charging of the secondary battery 100 is transmitted to the perovskite, and thereby, the ion transport speed and the hole transport speed are accelerated. In addition, it is possible to obtain the effects of the present invention most effectively when a ratio between the silicon-containing substance and graphene and a ratio between graphite and graphene satisfy the following conditions:
20 ≥ weight of graphite/weight of graphene ≥ 3
30 ≥ weight of silicon-containing substance/weight of graphene ≥ 4.

Furthermore, by using the silicon-containing substance having a particle diameter of from 30 to 200 nm and graphene having a multilayer structure, it has also been found that the present invention can be exhibited effectively and novel effects of the present invention can be obtained.

As described above, with the secondary battery 100 according to this embodiment, the ions generated in the electrode 10 or the electrode 20 move between the electrode 10 and the electrode 20 through the ion transporter 30. Because the ions move between the electrode 10 and the electrode 20, it is possible to realize the secondary battery 100 with a high capacity. In addition, with the secondary battery 100 according to this embodiment, the holes move between the electrode 10 and the electrode 20 through the hole transporter 40. Because the holes are smaller than the ions and have higher movability, it is possible to realize the secondary battery 100 with a high power output.

In addition, with thus found conditions, it has been found that the hole transporter 40 and the ions transport members 30 have a function of substituting the ions and the holes. This results in realization of the secondary battery 100 having a high safety, a long service life, a high capacity, and a high power input/output.

Furthermore, because propynyl methanesulfonate is contained in the battery, formation of resistive element on surfaces of silicon and graphene can be prevented, and so, inhibition of the transportation of the ions and the holes can be prevented. Therefore, it has also been found that the performance and service life of the secondary battery 100 can be improved. It is preferable that propynyl methanesulfonate be contained in the electrolyte in the battery.

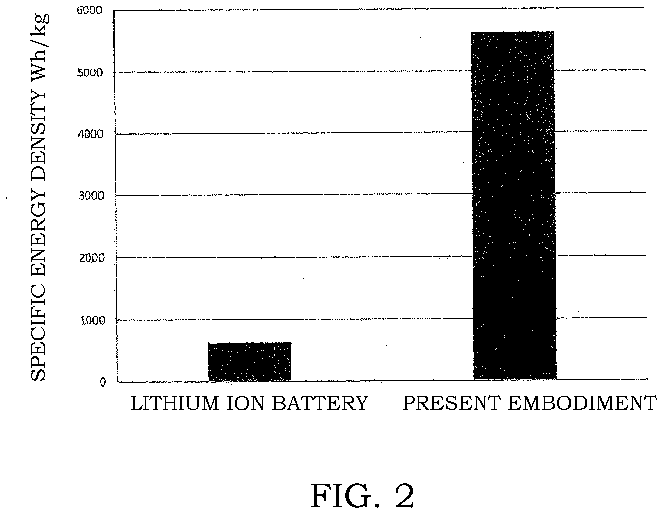

FIG. 2 is a graph showing specific energy densities of the secondary battery 100 according to this embodiment and a general lithium ion battery. As can be seen in FIG. 2, with the secondary battery 100 according to this embodiment, it is possible to remarkably improve a capacity performance characteristic compared to the conventional batteries.

As described above, with the secondary battery 100 according to this embodiment, a high capacity and a high power output are realized. The secondary battery 100 according to this embodiment has both of characteristics of a chemical battery in which the ions are transported through the ion transporter 30 and characteristics of a semiconductor battery in which the holes are transported through the hole transporter 40 from the electrode 10 that is the p-type semiconductor, and so, the secondary battery 100 may be referred to as a hybrid battery of the chemical battery and a physical battery (a semiconductor battery).

Alternatively, the secondary battery 100 may also be referred to as a bipolar battery in which a part corresponding to the electrode 20 is a semiconductor battery and a part corresponding to the electrode 10 is a battery that serves as a trigger of a semiconductor battery.

With the secondary battery 100 according to this embodiment, because the amount of the electrolytic solution serving as the ion transporter 30 can be reduced, even if an internal short circuit is caused by a contact between the electrode 10 and the electrode 20, it is possible to suppress increase in temperature of the secondary battery 100 and it is less likely to cause a fire. In addition, with the secondary battery 100 according to this embodiment, a loss of the capacity by a rapid discharge is small, and an excellent cycling characteristic can be attained.

By forming the electrode 20 with the n-type semiconductor, as well as forming the electrode 10 with the p-type semiconductor, the effects of the present invention can be obtained with ease, and it is possible to further improving the capacity and a power output characteristic of the secondary battery 100.

It is possible to determine whether or not the electrode 10 and the electrode 20 are formed of the p-type semiconductor and the n-type semiconductor, respectively, by determining hole effect. Due to the hole effect, if a magnetic field is applied while allowing the electric current flow, a voltage is generated in the direction perpendicularly to the direction of the electric current flow and the direction in which the magnetic field is applied. Based on the direction of the voltage generated, it is possible to determine whether the electrode is the p-type semiconductor or the n-type semiconductor.

FIG. 1 schematically shows that the ion transporter 30 is placed in the pores formed in the hole transporter 40. However, the present invention is not limited to this configuration. The ion transporter 30 may be placed at positions away from the hole transporter 40.

In addition, in the above description, in both cases in which the secondary battery 100 is charged and discharged, the ions and the holes are respectively transported via the ion transporter 30 and the hole transporter 40. However, the ions or the holes may be transported via either one of the ion transporter 30 and the hole transporter 40 when the secondary battery 100 is charged or discharged. For example, when the secondary battery 100 is discharged, the ion transporter (for example, electrolytic solution) 30 may not be provided, and only the holes may be transported. Alternatively, when the secondary battery 100 is charged, the hole transporter 40 may not be provided, and the ions may be transported from the electrode 10 to the electrode 20 through the ion transporter 30.

In addition, the hole transporter 40 may be formed integrally with the ion transporter 30. In other words, both of the ions and the holes may be transported through a single member.

It is further preferable that propynyl methanesulfonate be contained in the ion transporter 30. With such a configuration, the service life and the power input/output performance is remarkably improved with ease. Although the mechanism will be clarified, at this stage, it is confirmed that propynyl methanesulfonate has an effect of suppressing a reduction reaction at an interface between graphene and the electrolytic solution. In addition, it is also confirmed that propynyl methanesulfonate has an effect of reducing resistance to the movement of electrons and the holes to a graphene layer. In addition, it is also confirmed that propynyl methanesulfonate has an effect of inhibiting formation of the resistive element on a surface of silicon. It is believed that these effects play important roles. As a result, it is believed that the effects of the present inventions are achieved.

### <Electrode 10>

The electrode 10 contains complex oxide containing an alkali metal or an alkaline earth metal. For example, an alkali metal is at least one of lithium and sodium, and an alkaline earth metal is magnesium. The complex oxide serves as a positive-electrode active material of the secondary battery 100. For example, the electrode 10 is formed of a positive-electrode material that is prepared by mixing the complex oxide and a positive-electrode binding agent. In addition, the positive-electrode material may further be mixed with a conductive material. A type of the complex oxide is not limited to one type, and several types of the complex oxide may be used.

The complex oxide includes a p-type complex oxide that is the p-type semiconductor. For example, the p-type complex oxide includes lithium and nickel doped with at least one selected from a group consisting of antimony, lead, phosphorus, boron, aluminum, and gallium so as to function as the p-type semiconductor. The complex oxide can be expressed as LiₓNi_{y}M_{z}O_{α}, wherein 0 < x < 3, y + z= 1, and 1 < a < 4. In addition, M denotes an element that makes the complex oxide function as the p-type semiconductor, and M includes at least one selected from a group consisting of antimony, lead, phosphorus, boron, aluminum, and gallium. As the complex oxide is doped, the p-type complex oxide includes structural defects, and thereby, the holes are formed.

For example, it is preferable that the p-type complex oxide contains lithium nickel oxide doped with a metal element. As an example, the p-type complex oxide is a lithium nickel oxide doped with antimony.

It is preferable that several complex oxides be mixed together. For example, it is preferable that the complex oxide contains a solid-solution type complex oxide that forms a solid solution with the p-type complex oxide. The solid solution is formed from the p-type complex oxide and the solid-solution type complex oxide. For example, the solid-solution type complex oxide tends to form a laminar solid solution with nickel acid, and the solid solution becomes a structure through which the holes can move easily. For example, the solid-solution type complex oxide is lithium manganese oxide (Li₂MnO₃), and in this case, lithium has a valence number of two.

For example, the active material of the electrode 10 includes a complex oxide such as lithium nickel oxide, lithium manganese phosphate, lithium manganese oxide, lithium nickel manganate, lithium manganese niobate, and solid solutions and modified products thereof (those obtained by eutectically crystallizing a metal such as antimony, aluminum, magnesium, and so forth), as well as those obtained by subjecting the respective materials into chemical or physical syntheses.

The complex oxide may contain fluorine. For example, LiMnPO₄F may be used as the complex oxide. By doing so, because the electrolytic solution contains lithium hexafluorophosphate, it is possible to suppress change in the characteristic of the complex oxide even if hydrofluoric acid is formed.

The electrode 10 is formed of the positive-electrode material obtained by mixing the complex oxide, the positive-electrode binding agent, and the conductive material.

As a rubbery polymer used in the electrode binding agent, a polymer having a relatively high molecular weight is preferably mixed with a polymer having relatively low molecular weight. As described above, because polymers having different molecular weights are mixed, it is possible to obtain the rubbery polymer that is resistant to hydrofluoric acid and in which inhibition of the movement of the holes is suppressed.

For example, a negative electrode binding agent is carboxymethyl cellulose (CMC) having thickening effect. For example, the negative electrode binding agent is prepared by mixing MAC-350HC from Nippon Paper Industries Co., Ltd. and a modified acrylonitrile rubber (such as BM-451B from Zeon Corporation). A binding agent composed of polyacrylic acid monomer having an acrylic group (SX9172 from Zeon Corporation) is preferably used as the positive-electrode binding agent. In addition, acetylene black, Ketjen black, various graphite, graphene, carbon nanotubes, carbon nanofibers may be used solely or in combination as a conductive agent.

Because the above-described material is used as the electrode binding agent, a crack is less likely to be formed in the electrode 10 when the secondary battery 100 is assembled, and so, it is possible to maintain a high yield. In addition, because the material having the acrylic group is used as the positive-electrode binding agent, an internal resistance is lowered, and so, it is possible to suppress inhibition of a nature of the p-type semiconductor of the electrode 10.

It is preferable that graphene, ion conductive glass, or elemental phosphorus be present in the positive-electrode binding agent having the acrylic group. As a result, the positive-electrode binding agent is prevented from becoming a resistive component and the electrons become less likely to be trapped, and so, heat generation in the electrode 10 is suppressed. Specifically, if graphene, elemental phosphorus, or the ion conductive glass is present in the positive-electrode binding agent having the acrylic group, a dissociation reaction and diffusion of lithium are promoted in a case of a lithium ion battery. Because these materials are contained, an acrylic resin layer can cover the active material, and so, it is possible to suppress evolution of gas by a reaction between the active material and the electrolytic solution. Furthermore, also in a case of the present battery, because the battery internal resistance can be kept low, a result in which operation of the electrode 20 can be performed efficiently is brought about.

Furthermore, when graphene, elemental phosphorus, or the ion conductive glass material is present in the acrylic resin layer, in a case of a lithium ion battery, while an electric potential is lowered to lower an oxidation potential approaching the active material, lithium ions can move without being buffered. In addition, the acrylic resin layer has an excellent withstanding voltage. Therefore, it is possible to form a ion transportation mechanism that can realize a high capacity at high voltage and a high power output in the electrode 10. In addition, because temperature increase during high power output is suppressed due to a high diffusion rate and low resistance, it is also possible to improve a service life and safety. Also in the case of the present battery, an internal resistance can be reduced in a similar manner, and so, the present battery achieves a high efficiency and high performance. Therefore, it is also possible to maintain a long service life.

### <Electrode 20>

The electrode 20 allows occlusion and discharge of the ions, the holes, and the electrons generated in the electrode 10. The active material of the electrode 20 includes at least graphite, graphene, and silicon-containing material. In addition, various types of natural graphite, synthetic graphite, a silicon-based composite material (such as silicide), a silicon oxide-based material, a titanium alloy-based material, and various types of alloy composition materials may be used solely or by being mixed.

For example, the electrode 20 contains a mixture of graphene and silicon. Furthermore, a phosphorus oxide and a sulfur oxide are added and dispersed by using a high shear disperser (for example, FILMIX™ from PRIMIX Corporation). Thereby, in this case, the electrode 20 becomes a n-type semiconductor. Here, graphene forms nano-scale laminar structure with ten or less layers. Graphene may contain carbon nanotubes (CNT).

In particular, the electrode 20 preferably contains a mixture of graphite, graphene, and silicon or silicon oxide. In this case, it is possible to improve occlusion efficiency of the ions (cations) and the holes of the electrode 20, and at the same time, it is possible to provide the electron accumulation layer. In addition, because graphene and silicon oxide are both less likely to act as a heat generating component, it is possible to improve a safety and service life of the secondary battery 100. It is possible to obtain the effects of the present invention most effectively when a ratio between the silicon-containing substance and graphene and a ratio between graphite and graphene satisfy the following conditions:
20 ≥ weight of graphite/weight of graphene ≥ 3
30 ≥ weight of silicon-containing substance/weight of graphene ≥ 4.

Furthermore, by using the silicon-containing substance having a particle diameter of from 30 to 200 nm and graphene having a multilayer structure, it has also been found that the present invention can be exhibited effectively and novel effects of the present invention can be obtained.

As described above, it is preferable that the electrode 20 be a n-type semiconductor. The electrode 20 contains a material that contains graphene and silicon. A material containing silicon is, for example, SiOxa (xa < 2). In addition, by using graphene and/or silicon in the electrode 20, even if an internal short circuit is caused in the secondary battery 100, generation of heat is less likely to be caused, and therefore, it is possible to suppress explosion of the secondary battery 100.

In addition, the electrode 20 may be doped with a donor. For example, the electrode 20 is doped with a metal element as the donor. The metal element is, for example, an alkali metal or a transition metal. The electrode 20 may be doped with, for example, any of lithium, sodium, and potassium as the alkali metal. Alternatively, the electrode 20 may be doped with any of copper, titanium and zinc as the transition metal. In addition, a phosphorus oxide or a sulfur oxide may also be used.

Graphene doped with lithium may be used in the electrode 20. For example, the electrode 20 may be doped with lithium by adding organic lithium into a material of the electrode 20, and by heating or by using aforementioned FILMIX to utilize collision heat generated in the material under a high-shear condition. Alternatively, the electrode 20 may be doped with lithium by attaching lithium metal to the electrode 20. Preferably, the electrode 20 contains graphene doped with lithium, graphite doped with lithium, or silicon doped with lithium.

The electrode 20 may contain halogen. Thereby, it has been confirmed that a service life is further improved. Because halogen is contained, even if hydrofluoric acid is generated when lithium hexafluorophosphate is used as the electrolytic solution, change in the characteristics of the electrode 20 is suppressed. For example, halogen includes fluorine. For example, the electrode 20 may contain SiOxaF. Alternatively, halogen includes iodine.

The electrode 20 is formed of a negative-electrode material obtained by mixing the negative electrode active material and the negative electrode binding agent. As the negative electrode binding agent, materials similar to those for the positive-electrode binding agent can be used. the conductive material may further be mixed in the negative-electrode material.

### <Ion transporter 30>

The ion transporter 30 is any of a liquid form, a gel form, and a solid form. A Liquid form (electrolytic solution) is suitably used as the ion transporter 30. It is preferable that at least propynyl methanesulfonate be contained in the electrolytic solution.

In addition, in the electrolytic solution, a salt is dissolved in a solvent. As the salt, a mixture formed by mixing one or more element selected from a group consisting of LiPF₆, LiBF₄, LiClO₄, LiSbF₆, LiAsF₆, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl, LiI, lithium bis (pentafluoroethanesulfonyl) imide (LiN(SO₂C₂Fb)₂ (LiBETI), and lithium bis (trifluoromethanesulfonyl) imide (LiTFSI) is used.

In addition, as a solvent, a mixture formed by mixing one or more element selected from a group consisting of ethylene carbonate (EC), fluorinated ethylene carbonate (FEC), dimethyl carbonate (DMC), diethyl carbonate (DEC), and methyl ethyl carbonate (MEC) is used.

In addition, in order to ensure stability during overcharging, vinylene carbonate (VC), cyclohexylbenzene (CHB), propane sultone (PS), propylene sulfite (PRS), ethylene sufite (ES), modified products thereof, and so forth may be added to the electrolytic solution.

### <Hole transporter 40>

The hole transporter 40 is a solid form or a gel form. The hole transporter 40 is bonded to at least one of the electrode 10 and the electrode 20. Alternatively, the hole transporter 40 is bonded to at least one of the electrode 10 and the electrode 20 via the electrolyte. Preferably, the electrolyte has a layer having the perovskite structure. With such a configuration, by the expansion of silicon during charging of the secondary battery 100, the perovskite layer is subjected to a pressure, and thereby, a function of accelerating the movement of the holes is provided. With such a configuration, it has been found that a rapid charge that could not be achieved before is made possible.

In a case in which the electrolytic solution is used as the ion transporter 30, the hole transporter 40 preferably has a porous layer. In such a case, the electrode 10 is in communication with the electrode 20 through the electrolytic solution via the pores in the porous layer.

For example, the hole transporter 40 has a ceramic material. As an example, the hole transporter 40 has a porous film layer that contains an inorganic oxide filler. For example, the inorganic oxide filler preferably contains alumina (α-Al₂O₃) as a main component, and the holes move on a surface of alumina. In addition, the porous film layer may further contain ZrO₂-P₂O₅. Alternatively, as the hole transporter 40, titanium oxide, silica, or Li_{1+x+y}Alx (Ti,Ge)₂₋ₓSi_{y}P_{3-y}O₁₂ may be used by being mixed.

It is preferable that the hole transporter 40 is less likely to shrink regardless of a temperature change. In addition, it is preferable that a resistance of the hole transporter 40 be low. For example, as the hole transporter 40, a nonwoven fabric or porous film carrying a ceramic material is used. The nonwoven fabric is less likely to shrink regard less of a temperature change. In addition, the nonwoven fabric and the porous film exhibit voltage resistance, oxidation resistance, and low electric resistance. Therefore, the nonwoven fabric and porous film are suitably used as the material for the hole transporter 40.

It is preferable that the hole transporter 40 functions as a so-called separator. The hole transporter 40 has a composition that can withstand conditions in a working range of the secondary battery 100, and there is no particular limitation as long as loss of a semiconductor function of the secondary battery 100 is not caused. As the hole transporter 40, it is preferable that those in which alumina (α-Al₂O₃) is carried on the nonwoven fabric or porous film be used. A thickness of the hole transporter 40 is not particularly limited, but it is preferably be designed to be from 6 µm to 25 µm so that a designed capacity can be achieved.

In addition, it is preferable that alumina be further mixed with ZrO₂-P₂O₅. Furthermore, it is also preferable that alumina be mixed with a metal such as antimony, aluminum, magnesium, and so forth, or a compound or complex thereof. Consequently, in this case, it is possible to make the holes to be transported more easily.

### <Current Collector 110, 120>

For example, the first current collector 110 and the second current collector 120 are formed of stainless steel or nickel foil. As a result, it is possible to increase an electric potential range at low cost.

### <EXAMPLES>

Examples of the present invention will be described below. Note that the present invention is not limited to the following examples.

### (Comparative Example 1)

The positive-electrode material was prepared by stirring Nickel manganese lithium cobaltate BC-618 from Sumitomo 3M Limited, PVDF #1320 from KUREHA CORPORATION (a solution in N-methylpyrrolidone (NMP) at a solid content of 12 parts by weight), and acetylene black at a weight ratio of 3:1:0.09 together with additional N-methylpyrrolidone (NMP) by using a twin-arm kneader. The positive-electrode material was coated on an aluminum foil having a thickness of 13.3 µm. After dried, the aluminum foil was subjected to a rolling so as to have a total thickness of 155 µm, and subsequently, the aluminum foil was cut into a specific size to form a positive electrode.

On the other hand, the negative-electrode material was prepared by stirring synthetic graphite, a styrene-butadiene copolymer rubber particle binder BM-400B from Zeon Corporation (solid content: 40 parts by weight), and carboxymethyl cellulose (CMC) at a weight ratio of 100:2.5:1 together with a suitable amount of water by using a twin-arm kneader. The negative-electrode material was coated on a copper foil having a thickness of 10 µm. After dried, the copper foil was subjected to a rolling so as to have a total thickness of 180 µm, and subsequently, the copper foil was cut into a specific size to form a negative electrode.

A laminar structure was formed by interposing a polypropylene micro-porous film having a thickness of 20 µm as the separator between the positive electrode and the negative electrode, and the laminar structure was inserted into a battery casing can after cut into a predetermined size. An electrolytic solution was prepared by dissolving LiPF₆ (1M) in a mixed solvent formed by mixing ethylene carbonate (EC), dimethyl carbonate (DMC), and methyl ethyl carbonate (MEC). The electrolytic solution was injected into the battery casing can under a dry-air atmosphere and left it for a certain period. Subsequently, a preliminary charging was performed for about 20 minutes with an electric current equivalent to 0.1 C, and the battery casing can was sealed to form a stacked lithium ion secondary battery. Thereafter, an aging was performed by leaving the lithium ion secondary battery under a normal temperature environment for a certain period.

### (Comparative Example 2)

A material obtained by doping lithium nickel oxide (Sumitomo Metal Mining Co., Ltd.) with antimony (Sb) at 0.7 wt%; Li_{1.2}MnPO₄ (Lithiated Metal Phosphate II from Dow Chemical Company); and Li₂MnO₃ (ZHFL-01 from Zhenhua E-Chem Co., Ltd.) were mixed at weight proportions of 54.7 wt%, 18.2 wt%, and 18.2 wt%, respectively. The mixture was treated in AMS-LAB (Mechano Fusion) from Hosokawa Micron Corporation at a rotation speed of 1500rpm for 3 minutes, thereby forming the active material for the electrode 10. Next, the active material, acetylene black as a conductive member, and the binding agent composed of polyacrylic acid monomer having an acrylic group (SX9172 from Zeon Corporation) were stirred at a weight ratio based on solid content of 92:3:5 together with N-methylpyrrolidone (NMP) by using twin-arm kneader, thereby forming the positive-electrode material.

The positive-electrode material was coated on a SUS current collector foil (Nippon Steel & Sumikin Materials Co., Ltd.) having a thickness of 13 µm. After dried, the current collector foil was subjected to a rolling so as to have a surface density of 26.7mg/cm². Subsequently, the current collector foil was cut into a specific size to obtain the electrode 10. The hole effect of the electrode 10 was determined, and it was confirmed that the electrode 10 was the p-type semiconductor.

On the other hand, a graphene material ("xGnP Graphene Nanoplatelets H type" from XG Sciences, Inc.), and silicon oxide SiOₓₐ ("SiOx" from Shanghai Suzy Technology Co., Ltd.) were mixed at a weight ratio of 56.4: 37.6. The mixture was treated in NOB-130 (Nobilta) from Hosokawa Micron Corporation at a rotation speed of 800 rpm for 3 minutes, thereby forming the negative electrode active material. Next, the negative electrode active material and the negative electrode binding agent formed of polyacrylic acid monomer having an acrylic group (SX9172 from Zeon Corporation) were stirred together with N-methylpyrrolidone (NMP) at a solid content a weight ratio of 95: 5 by using a twin-arm kneader, thereby forming the negative-electrode material.

The negative-electrode material was coated on a SUS current collector foil (Nippon Steel & Sumikin Materials Co., Ltd.) having a thickness of 13 µm. After dried, the current collector foil was subjected to a rolling so as to have a surface density of 5.2mg/cm². Subsequently, the current collector foil was cut into a specific size to form the electrode 20.

A laminar structure was formed by interposing a sheet carrying α-alumina on a nonwoven fabric ("Nano X" from Mitsubishi Paper Mills Limited) having a thickness of 20 pm between the electrode 10 and the electrode 20. The laminar structure was cut into a predetermined size and inserted into a battery casing. A nonwoven fabric sheet carrying α-alumina was treated so as to be impregnated with "Novolyte EEL-003" from Novolyte technologies (added with vinylene carbonate (VC) and lithium bis(oxalate) borate (LiBOB) at 2 wt% and 1 wt%, respectively).

Next, a mixed solvent was prepared by mixing EC (ethylene carbonate), DMC (dimethyl carbonate), and EMC (ethyl methyl carbonate) at a volume ratio of 1:1:1, and LiPF₆ (1M) was dissolved in this mixed solvent to form the electrolytic solution. The electrolytic solution was injected into the battery casing under a dry-air atmosphere, and left it for a certain period. Subsequently, a preliminary charging was performed for about 20 minutes with an electric current equivalent to 0.1 C, and the battery casing was sealed. Thereafter, an aging was performed under a normal temperature environment for a certain period to form the secondary battery.

### (Example 1)

To a material obtained by adding antimony (Sb) (Kojundo Chemical Laboratory Co., Ltd.) to lithium nickel oxide (JFE Mineral Corporation) at an amount equivalent to 0.4 wt%, graphene (Graphenetype-R from XGSciencess) as the conductive member and the binding agent composed of polyacrylic acid monomer having an acrylic group (SX9172 from Zeon Corporation) were stirred and dispersed at a solid content weight ratio of 92:3:5 together with N-methylpyrrolidone (NMP) by using FILMIX (a thin film spinning high-speed mixer from PRIMIX Corporation) to form the positive-electrode material.

The positive-electrode material was coated on a SUS current collector foil (Nippon Steel & Sumikin Materials Co., Ltd.) having a thickness of 13 µm. After dried, the current collector foil was subjected to a rolling so as to have a surface density of 26.7mg/cm². Subsequently, the current collector foil was cut into a specific size to obtain the electrode 10. The hole effect of the electrode 10 was determined, and it was confirmed that the electrode 10 was the p-type semiconductor.

On the other hand, graphite having a particle diameter along the longitudinal axis of 1 to 10 µm (Shanghai Suzy Technology Co., Ltd.) and silicon having a spherical particle diameter of from 30 to 200 nm (Shanghai Suzy Technology Co., Ltd.) were treated and mixed together at a weight ratio of 1: 1 using NOB-130 (Nobilta) from Hosokawa Micron Corporation at 800 rpm for 3 minutes. The mixture, a graphene material ("xGnP Graphene Nanoplatelets H type" from XG Sciences, Inc.), a solution of a cmc (MAC350HC from Nippon Paper Industries Co., Ltd.) in water at 1.4 wt%, and a binding agent formed of an emulsion of polyacrylic acid monomer (BM451B from Zeon Corporation) were stirred for a certain period using a twin-arm mixer at a blending ratio to achieve a weight proportions of 90.8%, 4.32%, 1.96%, and 2.92%, respectively. Subsequently, to the stirred mixture, phosphorus pentoxide (Kojundo Chemical Laboratory Co., Ltd.) was added at a weight ratio of 1:0.005 using FILMIX (PRIMIX Corporation) to form the negative electrode coating material. At this point, it is important that the weight of graphite was in a range of from three to twenty times the weight of graphene, and the weight of silicon was in a range of from four to thirty times weight of graphene. If the weight is outside these range, a below-mentioned issue becomes apparent, and it becomes difficult to obtain the characteristics of the present invention efficiently.

A SUS current collector foil having a thickness of 13 µm (Nippon Steel & Sumikin Materials Co., Ltd.) was coated with the negative-electrode material, dried, and subsequently, the current collector foil was subjected to a rolling so as to have a surface density of 5.2mg/cm². Thereafter, the current collector foil was cut into a specific size to form the electrode 20.

A laminar structure was formed by interposing a film sheet carrying a ceramic material having a thickness of 25 µm ("CPORE" from Ube Industries, Ltd.) between the electrode 10 and the electrode 20. The laminar structure was cut into a predetermined size and inserted into a battery casing.

Next, a mixed solvent was prepared by mixing EC (ethylene carbonate), DMC (dimethyl carbonate), and EMC (ethyl methyl carbonate) at a volume ratio of 1/1/1, and LiPF₆ (1M) was dissolved in this mixed solvent. Furthermore, 1.5 wt% of vinylene carbonate (VC), 2.0 wt% of fluorinated ethylene carbonate (FEC), 0.5 wt% of propynyl methanesulfonate (PMS), and 1 wt% of 1,3-propanesultone (PS) were added to form the electrolytic solution. The above-mentioned film carrying the ceramic material was treated under a dry environment so as to be impregnated with the electrolytic solution. Subsequently, the film was left for a certain period in the battery casing under a dry-air atmosphere. Subsequently, a preliminary charging was performed for about 20 minutes with an electric current equivalent to 0.1 C, and the battery casing was sealed. Thereafter, an aging was performed under a normal temperature environment for a certain period to form the secondary battery.

### (Comparative Example 3)

In Comparative Example 3, a battery was formed by using silicon having a particle diameter that is larger than the particle diameter (200 nm) of the silicon used in Example 1. In this Comparative Example, silicon having the smallest particle diameter of about 210 nm, an average particle size of 227 nm, and a particle diameter range up to 500 nm was used. In addition, a manufacturing cost is more than doubled for silicon having a particle diameter smaller than 30 nm, thereby presently causing an issue on a production.

### (Comparative Example 4)

Comparative Example 4 relates to a battery in which the ratio of weight of graphite/weight of graphene in Example 1 was less than 3, and in this Comparative Example, the battery was formed with a specification condition in which the ratio was equal to 2.9. In addition, it is meant that the technical scope of the prior art is also included in the specification having the ratio of less than 3.

### (Comparative Example 5)

Comparative Example 5 relates to a battery in which the ratio of weight of graphite/weight of graphene in Example 1 was greater than 20, and in this Comparative Example, the battery was formed with a composition ratio design such that the ratio was 21.

### (Comparative Example 6)

Comparative Example 6 relates to a case in which a weight ratio of silicon/graphene was less than 4. In this Comparative Example, the battery was formed with a composition ratio design such that the ratio was 3.9. In addition, the technical scope of the prior art is included in this range.

### (Comparative Example 7)

Comparative Example 7 relates to a case in which a weight ratio of silicon/graphene was greater than 30. In this Comparative Example, the battery was formed with a composition ratio design such that the ratio was 31.

### (Example 2)

In Example 2, a solution of PbI₂ dissolved in N,N-dimethylformamide (DMF) (concentration 40%) was coated on a surface of the negative electrode obtained in Example 1 using MICROGRAVURE, and dried. Furthermore, the negative electrode was over coated with a solution of CH₃NH₃I in 2-propanol (concentration 45%) using MICROGRAVURE, and dried. Furthermore, a battery was formed by using the electrode that had been vacuum dried (a vacuum of 100 kPa, 105 °C, 72 hours). It was confirmed by using a TOF-SIMS, etc. that about 4 to 6 µm thick CH₃NH₃PbI₃ was formed on the negative electrode obtained by such a procedure.

The batteries in Examples 1 and 2, and Comparative Examples 1 to 7 formed as described above were evaluated by methods described below.

### (Evaluation of Battery Initial Capacity)

Comparative Performance Evaluation of the capacity of each secondary battery was performed by setting 1 C discharged capacity in the specification electric potential range of 2 V to 4.3 V in Comparative Example 1 to 100. In addition, for the shape of each battery, a rectangular battery can was employed to obtain a laminated battery in this Evaluation. In addition, for evaluation of capacity, Comparative Performance Evaluation of the capacity of each secondary battery was also performed at an electric potential range of 2 V to 4.6 V. Furthermore, a discharge capacity ratio of 10 C/ 1 C was measured. As a result, a power output performance was evaluated. Similarly, a charge capacity ratio of 10 C/1 C was measured. As a result, a power input performance and a rapid charge property were evaluated.

### (Nail Penetration Test)

For a fully charged secondary battery, a state of heat generation and an appearance thereof were observed after the secondary battery was stabbed with an iron nail having a diameter of 2.7 mm to penetrate therethrough under a normal temperature environment at a speed of 5 mm/sec. The results are shown in Table 1 below. In Table 1, the secondary battery in which a change in the temperature and appearance of a secondary battery was not observed is indicated as "OK", and the secondary battery in which a change in the temperature and appearance of the secondary battery was observed is indicated as "NG".

### (Overcharge Test)

The current was maintained at a charge rate of 200%, and it was determined whether or not a change in the appearance was caused for a period of more than 15 minutes. The results are shown in Table 1 below. In Table 1, the secondary battery in which an abnormality was not caused is indicated as "OK", and the secondary battery in which a change (swollen, explosion, or the like) was caused is indicated as "NG".

### (Normal Temperature Service Life Characteristic)

The secondary batteries in Examples 1 and 2, and Comparative Examples 1 to 7 (the specification electric potential range of 2 V to 4.3 V) were subjected to, at 25 °C, a cycle of charging at 1 C/4.3 V and discharging at 1 C/2 V for 3,000 cycles and 10,000 cycles. Decrease in the capacity was observed with respect to the initial capacity.

### (Evaluation Result)

Table 1 shows the results of the test described above.

**Table 1**

| | Capacity ratio at 1C discharge rate | Capacity (1C) [mAh/g] 2 - 4.3 V | Capacity (1C) [mAh/g] 2 - 4.6 V | 10C/1C discharge capacity ratio | 10C/1C charge capacity ratio | 3000 cycle service life test (capacity retaining ratio) [%] | 10000 cycle service life test (capacity retaining ratio) [%] | Safety Test | |
|---|---|---|---|---|---|---|---|---|---|
| | | | | | | | | Overcharge | Nail penetration test |
| Comparative Example 1 | 100 | 168 | NG Degraded | 0.04 | 0.03 | 58 | 0 | NG | NG |
| Comparative Example 2 | 573 | 962 | 985 | 0.92 | 0.68 | 90 | 48 | OK | OK |
| Example 1 | 741 | 1245 | 1384 | 0.96 | 0.93 | 92 | 87 | OK | OK |
| Comparative Example 3 | 576 | 968 | 972 | 0.92 | 0.71 | 89 | 51 | OK | OK |
| Comparative Example 4 | 573 | 963 | 978 | 0.91 | 0.66 | 88 | 45 | OK | OK |
| Comparative Example 5 | 183 | 307 | 324 | 0.21 | 0.23 | 71 | 14 | OK | OK |
| Comparative Example 6 | 191 | 321 | 333 | 0.24 | 0.29 | 86 | 74 | OK | OK |
| Comparative Example 7 | 654 | 1099 | 1114 | 0.14 | 0.13 | 37 | 4 | OK | OK |
| Example 2 | 880 | 1478 | 1503 | 0.98 | 0.98 | 93 | 89 | OK | OK |

The secondary battery in Comparative Example 1 is a so-called general lithium ion secondary battery. With the secondary battery in Comparative Example 1, a significant overheating was observed after one second regard less of the nail penetration speed. In contrast, the secondary battery in Example 1 showed little temperature increase after the nail penetration and a great suppression was achieved. The batteries after the nail penetration test were disassembled and examined. In the secondary battery in Comparative Example 1, the separator was melted over a wide area. However, in the secondary battery in Example 1, the ceramic-containing film was holding its original shape. Based on these results, it was believed that a significant overheating was prevented because the ceramic-containing film could manage to keep its structure even after the heat generation due to a short circuit caused by the nail penetration and spreading of the short-circuit area could be suppressed. In addition, with the configuration according to Example, it was also confirmed that the battery was operatable after the nail was stabbed and pulled out. In Comparative Example 1, the battery was not observed to be operatable. These results are thought to be brought about because the battery of the present invention is not an ion battery, but a battery having the semiconductor mechanism utilizing movement of the holes. These results mean that even if a part of the structure of the battery is destroyed, the operatability of the battery is still maintained as long as its semiconductor mechanism is still established. Thus, the battery of the present invention has a superior impact-resistance that could not be obtained with conventional ion batteries. With the present invention, by discovering such a feature, it is possible to realize a highly safe battery with a high capacity and high power input/output.

Here, it can be seen that the battery having the perovskite layer (layers containing lead and iodine in the present case) has the highest power input/output performance, and its performance has been increased. A rapid charging of the secondary battery 100 became possible because the perovskite layer was thought to become able to induce the holes in a greater amount due to the pressure applied thereto by the expansion of silicon during charging of the secondary battery 100. In addition, it is thought that it is possible to achieve the high power output when the secondary battery 100 is discharged because the movement of the holes in the opposite direction from the direction during the charging is accelerated due to the decrease in the internal pressure in the perovskite layer by a contraction of silicon.

Comparative Example 2 is Example disclosed in prior arts. No strict definition was stated on silicon particle diameter in the prior arts, and it is shown that the performance can be improved greatly according to the scope of the provision of the present invention. As shown in Example 1 and Comparative Example 3, there are great distinctions in terms of the capacity performance and the service life.

In addition, it has been found that a result providing a high performance, which could not be achieved conventionally, could be brought about by defining ranges for the ratio between graphite and graphene and the ratio between silicon and graphene. For example, if the weight of graphite is less than three times the weight of graphene as shown in Comparative Example 4, the rapid charge performance and the service life are deteriorated. It is thought to be due to an effect of the decrease in an internal density of the electrode caused by the greater amount of graphene. If the weight of graphite is greater than twenty times the weight of graphene as shown in Comparative Example 5, only a performance similar to that of a conventional lithium ion battery is obtained. It is thought that this result means that the semiconductor function according to the present invention becomes less likely to be exhibited under such a condition. If the content of silicon is less than four times the content of graphene as shown in Comparative Example 6, the capacity performance is deteriorated greatly and a rate performance is also deteriorated. It was also found out that it means that it is difficult for the electric charge to be stored if graphene is the main content. If the weight of silicon is greater than thirty times the weight of graphene as shown in Comparative Example 7, although a good capacity performance is obtained, the service life performance is deteriorated greatly. In addition, it can be seen that because the rate performance is also deteriorated, the condition is also unfavorable for the high power output and the rapid charge.

When the secondary battery 100 is charged at 4.6 V in Example 1, electrons distribution in the electrode 20 is evaluated by slicing it into blocks and using determination of electric current and resistance. It was also found that the distribution was biased in one direction along the direction perpendicular to the electric field. Determination of the holes was performed at the same time, and it was found that the distribution was biased in the direction substantially perpendicular to the electric field direction but in the direction opposite from that for the electron distribution. From this result, it was also possible to observe a phenomenon in which the electrons and the holes move in the electrode 20 along the direction substantially perpendicular to the electric field but in opposite directions to each other. It has also been found that the electron accumulation layer is formed in the electrode 20 when the secondary battery 100 is charged.

The embodiments of the present invention have been described above, but the above-mentioned embodiments are merely parts of examples of application examples of the present invention, and there is no intention to limit the technical scope of the present invention to the specific configuration of the above-mentioned embodiment.

The present application claims a priority based on Japanese Patent Application No. 2017-150950 filed on August 3, 2017 in the Japan Patent Office, the entire contents of which are incorporated herein by reference.

### INDUSTRIAL APPLICABILITY

The secondary battery according to the present invention is capable of achieving high power output and high capacity that allows rapid charging and is suitably employed as a highly-safe large-size rechargeable battery, etc. For example, the secondary battery according to the present invention is suitably employed as a rechargeable battery for a power generation mechanism with unstable power generation, such as a geothermal power generation mechanism, a wind power generation mechanism, a solar power generation mechanism, a water power generation mechanism, and a wave power generation mechanism. In addition, the secondary battery according to the present invention is also suitably employed in a mobile object such as an electric vehicles, etc. In addition, because the secondary battery according to the present invention is highly safe, it is also widely employed as a battery for a card, a mobile phone, and a mobile terminal device.

## Claims

1. A secondary battery comprising: a first electrode; a second electrode; a separator containing a ceramic material; and an electrolyte, wherein the second electrode contains: a silicon-containing substance having a particle diameter of from 30 to 200 nm; a multilayer graphene; a graphite material; and a binding agent.

2. The secondary battery according to claim 1, wherein
a weight ratio between the graphite material and the multilayer graphene and a weight ratio between the silicon-containing substance and the multilayer graphene in the second electrode are as follows:
20 ≥ weight of graphite material/weight of multilayer graphene ≥ 3; and
30 ≥ weight of silicon-containing substance/weight of multilayer graphene ≥ 4.

3. The secondary battery according to claim 1 or 2, wherein
the electrolyte contains propynyl methanesulfonate.

4. The secondary battery according to claim 1 or 2, wherein
the electrolyte is a solid electrolyte and contains elemental phosphorus and elemental sulfur.

5. The secondary battery according to any one of claims 1, 2, and 4, wherein
the electrolyte has a layer having a perovskite structure.

6. The secondary battery according to claim 5, wherein
the layer having the perovskite structure contains elemental lead and elemental iodine.

7. The secondary battery according to claim 5 or 6, further comprising
a mechanism in which an electricity storage mechanism is exhibited as an external force is exerted on a perovskite layer by expansion of the silicon-containing substance during charging of the secondary battery.

8. The secondary battery according to any one of claims 1 to 7, wherein
the first electrode consists of a material containing lithium and nickel.
